# EUROPEAN PATENT SPECIFICATION

(11) **EP 4 537 561 B1**
(45) Date of publication and mention of the grant of the patent: **26.08.2026**
(21) Application number: 22735098.0
(22) Date of filing: 08.06.2022
(51) Int. Cl.: H04W 12/30, H04W 8/20, H04W 12/069, H04L 9/32

(54) **PROVISIONING OF A SUBSCRIPTION PROFILE TO A SUBSCRIBER MODULE**
BEREITSTELLUNG EINES TEILNEHMERPROFILS AN EIN TEILNEHMERMODUL
FOURNITURE D'UN PROFIL D'ABONNEMENT À UN MODULE D'ABONNÉ

(43) Date of publication of application: 16.04.2025
(73) Proprietor: Telefonaktiebolaget LM Ericsson (publ), 164 83 Stockholm (SE)
(72) Inventor: SALMELA, Patrik, 02230 ESPOO (FI); STÅHL, Per, 218 51 KLAGSHAMN (SE); THAKUD, Mukesh, 02320 Espoo (FI); PAAVOLAINEN, Santeri, 02430 MASALA (FI)
(74) Representative: Ericsson
(86) International application number: PCT/EP2022/065497
(87) International publication number: WO 2023/237187

(56) References cited:
- US-A1- 2016 302 061
- US-A1- 2022 060 893
- NTT DOCOMO: "Questions on Key Issue #1.8: UEs with asymmetric keys", vol. SA WG3, no. Sophia Antipolis (France); 20170206 - 20170210, 9 February 2017 (2017-02-09), XP051217742, Retrieved from the Internet <URL:http://www.3gpp.org/ftp/Meetings_3GPP_SYNC/SA3/Docs/> [retrieved on 20170209]

## Description

### TECHNICAL FIELD

Embodiments presented herein relate to methods, a subscriber module, a provisioning server, a credentials issuer entity, computer programs, and a computer program product for provisioning of a subscription profile to the subscriber module.

### BACKGROUND

The Global System for Mobile communication Alliance (GSMA) has specified how to provide subscribers with third generation partnership project (3GPP) subscription profiles, often denoted Subscriber Identity Module (SIM) subscription profiles, hereinafter denoted subscription profiles. Such subscription profiles can be remotely downloaded over the Internet to the physical hardware in the communication device known as embedded Universal Integrated Circuit Card (eUICC) or integrated Universal Integrated Circuit Card (iUICC) or integrated embedded Universal Integrated Circuit Card (ieUICC). A remote SIM provisioning protocol (RSP) is followed to remotely deliver subscription profiles from a provisioning server (such as an enhanced Subscription Manager Data Preparation (SM-DP+) server; hereinafter denoted SM-DP+ entity for short) to the communication device. Remote SIM provisioning for consumer devices is described in the documents "SGP.21 - RSP Architecture Specification v2.4" and "SGP.22 - RSP Technical Specification v2.4". An architecture for eSIM for Internet-of-Things (IoT) devices is described in "SGP.31 - eSIM IoT Architecture and Requirements v1.0".

Accordingly, the owner of the communication device obtains a subscription for the communication device from a mobile service provider, which in many cases is the mobile network operator (MNO), by providing the MNO with relevant information about owner of the communication device and the communication device to be provisioned, optionally including the eUICC ID (EID) and International Mobile Equipment Identity (IMEI). In the present disclosure, the term MNO is used also in the case where a separate mobile service provider is used. The subscription can be retrieved from a point of sales, via a web page of the MNO or other similar techniques.

The MNO then requests the SM-DP+ entity to generate the matching subscription profile. An activation code (AC) is generated either by the SM-DP+ entity or the MNO that is provided to the user that the user can insert into, or otherwise provide, to the communication device to be provisioned. The eUICC can extract the relevant information (such as SM-DP+ reachability information etc.) from the AC and then proceed to contact the SM-DP+ entity for downloading the subscription profile based on the AC (after running a mutual authentication process with the SM-DP+ entity).

In order to use services of a third generation partnership project (3GPP) telecommunication network, network access authentication is performed between the communication device and the network where a SIM profile, typically stored on a traditional SIM card or eUICC, is leveraged for the authentication. For public 3GPP networks the SIM based authentication leveraging the AKA (where AKA is short for Authentication and Key Agreement) algorithm is currently the only allowed authentication methods for the so-called primary authentication. The AKA algorithm runs in the eUICC or SIM card and leverages credentials stored therein, such as identifier international mobile subscriber identity (IMSI) and shared secret between the eUICC and the network. For public fifth generation (5G) telecommunication networks, either the 5G-AKA or the EAP-AKA' authentication method must be used (where EAP is short for Extensible Authentication Protocol). Both of these methods leverage the AKA algorithm. EAP-AKA' is using EAP framework that is mandatory to be supported in 5G networks. With the EAP framework in place, other authentication methods leveraging EAP, such as EAP-TLS, can easily be added (where TLS is short for Transport Layer Security). EAP-TLS is leveraging asymmetric credentials and certificates.

For standalone non-public (private) 5G networks any EAP based method is allowed to be used for the primary authentication and may also leverage an external Authentication, Authorization, and Accounting (AAA) server of an external credentials holder acting as an EAP backend authentication server. For so-called Public Network Integrated Non-Public Networks (PNI-NPN) any EAP based method may be used for secondary authentication to access an external data network. Also slice specific authentication to access a particular network slice is using the EAP framework and allows any EAP based method to be used.

In summary, with 5G networks also alternative credentials to SIM-based credentials have been introduced. These credentials could be e.g., certificates. However, today, the use of such alternative credentials is still limited to private (i.e., Non-Public) network use. This limits the practical use of alternative credentials.

The following documents are referred to provide background information and context. US 2022/0060893, describes a method in which an enterprise authentication server uses an EAP-based authentication process to securely provision standalone non-public network (SNPN) credentials to a user equipment while it is connected to a different access network, with confirmation of successful credential delivery. US 2016/0302061, describes a method and device in a pre-5G/5G wireless system that securely download and install an encrypted profile in a terminal by generating, storing, and later using an encryption key when a profile download is initiated by a server.

### SUMMARY

An object of embodiments herein is to address the above issues in order to enable the use of alternative credentials also in public networks.

According to a first aspect there is presented a method for provisioning of a subscription profile. The method is performed by a subscriber module. The method comprises receiving, in response to successfully having performed mutual authentication with a provisioning server, preparation information from the provisioning server. The preparation information comprises an indication of which type of subscription profile that is to be provisioned. The method comprises providing a request towards the provisioning server for the subscriber module to be provisioned with the subscription profile. The request comprises a public key of a private-public key pair generated in a security domain of the subscriber module and is digitally signed by a private key of the private-public key pair, producing a first signature. Creation of the security domain is triggered by reception of the indication. The method comprises downloading the subscription profile from the provisioning server. The subscription profile comprises a credential generated as a function of the public key of the private-public key pair and is digitally signed by a credentials issuer entity. The method comprises installing the subscription profile in the security domain of the subscriber module.

According to a second aspect there is presented a subscriber module for provisioning of a subscription profile. The subscriber module comprises processing circuitry. The processing circuitry is configured to cause the subscriber module to receive, in response to successfully having performed mutual authentication with a provisioning server, preparation information from the provisioning server. The preparation information comprises an indication of which type of subscription profile that is to be provisioned. The processing circuitry is configured to cause the subscriber module to provide a request towards the provisioning server for the subscriber module to be provisioned with the subscription profile. The request comprises a public key of a private-public key pair generated in a security domain of the subscriber module and is digitally signed by a private key of the private-public key pair, producing a first signature. Creation of the security domain is triggered by reception of the indication. The processing circuitry is configured to cause the subscriber module to download the subscription profile from the provisioning server. The subscription profile comprises a credential generated as a function of the public key of the private-public key pair and is digitally signed by a credentials issuer entity. The processing circuitry is configured to cause the subscriber module to install the subscription profile in the security domain of the subscriber module.

According to a third aspect there is presented a non - claimed computer program for provisioning of a subscription profile, the computer program comprising computer program code which, when run on processing circuitry of a subscriber module, causes the subscriber module to perform a method according to the first aspect.

According to a fourth aspect there is presented a method for provisioning of a subscription profile to a subscriber module. The method is performed by a provisioning server. The method comprises obtaining an indication specifying that a type of subscription profile is to be prepared for the subscriber module. The indication is part of profile preparation data. The method comprises providing, in response to successfully having performed mutual authentication with the subscriber module, preparation information towards the subscriber module. The preparation information comprises an indication of which type of subscription profile that is to be provisioned. The method comprises obtaining a request from the subscriber module for the subscriber module to be provisioned with the subscription profile. The request comprises a public key of a private-public key pair generated by the subscriber module and is digitally signed by a private key of the private-public key pair, producing a first signature. The method comprises providing the request towards a credentials issuer entity. The method comprises obtaining the subscription profile from the credentials issuer entity. The subscription profile comprises a credential generated as a function of the public key of the private-public key pair and is digitally signed by the credentials issuer entity. The method comprises enabling the subscriber module to download the subscription profile from the provisioning server. According to a fifth aspect there is presented a provisioning server for provisioning of a subscription profile to a subscriber module. The provisioning server comprises processing circuitry. The processing circuitry is configured to cause the provisioning server to obtain an indication specifying that a type of subscription profile is to be prepared for the subscriber module. The indication is part of profile preparation data. The processing circuitry is configured to cause the provisioning server to provide, in response to successfully having performed mutual authentication with the subscriber module, preparation information towards the subscriber module. The preparation information comprises an indication of which type of subscription profile that is to be provisioned. The processing circuitry is configured to cause the provisioning server to obtain a request from the subscriber module for the subscriber module to be provisioned with the subscription profile. The request comprises a public key of a private-public key pair generated by the subscriber module and is digitally signed by a private key of the private-public key pair, producing a first signature. The processing circuitry is configured to cause the provisioning server to provide the request towards a credentials issuer entity. The processing circuitry is configured to cause the provisioning server to obtain the subscription profile from the credentials issuer entity. The subscription profile comprises a credential generated as a function of the public key of the private-public key pair and is digitally signed by the credentials issuer entity. The processing circuitry is configured to cause the provisioning server to enable the subscriber module to download the subscription profile from the provisioning server.

According to a sixth aspect there is presented a non - claimed computer program for provisioning of a subscription profile to a subscriber module, the computer program comprising computer program code which, when run on processing circuitry of a provisioning server, causes the provisioning server to perform a method according to the fourth aspect.

According to a seventh aspect there is presented a method for provisioning of a subscription profile to a subscriber module. The method is performed by a credentials issuer entity. The method comprises obtaining a request from a provisioning server for the subscriber module to be provisioned with the subscription profile. The request comprises a public key of a private-public key pair generated by the subscriber module and is digitally signed by a private key of the private-public key pair, producing a first signature. The method comprises generating the subscription profile. The subscription profile comprises a credential generated as a function of the public key of the private-public key pair and is digitally signed by the credential issuer entity. The method comprises providing the subscription profile towards the provisioning server for provisioning of the subscription profile to the subscriber module.

According to an eighth aspect there is presented a credentials issuer entity for provisioning of a subscription profile to a subscriber module. The credentials issuer entity comprises processing circuitry. The processing circuitry is configured to cause the credentials issuer entity to obtain a request from a provisioning server for the subscriber module to be provisioned with the subscription profile. The request comprises a public key of a private-public key pair generated by the subscriber module and is digitally signed by a private key of the private-public key pair, producing a first signature. The processing circuitry is configured to cause the credentials issuer entity to generate the subscription profile. The subscription profile comprises a credential generated as a function of the public key of the private-public key pair and is digitally signed by the credential issuer entity. The processing circuitry is configured to cause the credentials issuer entity to provide the subscription profile towards the provisioning server for provisioning of the subscription profile to the subscriber module.

According to a tenth aspect there is presented a non - claimed computer program for provisioning of a subscription profile to a subscriber module, the computer program comprising computer program code which, when run on processing circuitry of a credentials issuer entity 40, causes the credentials issuer entity to perform a method according to the seventh aspect.

According to an eleventh aspect there is presented a non - claimed computer program product comprising a computer program according to at least one of the third aspect, the sixth aspect, and the tenth aspect and a computer readable storage medium on which the computer program is stored. The computer readable storage medium can be a non-transitory computer readable storage medium.

Advantageously, these aspects enable asymmetric key based credentials to be provisioned to subscriber modules in communication devices.

Advantageously, these aspects provide flexibility with respect to the type of credentials that can be used with 3GPP networks. Hence, these aspects enable the use of alternative credentials also in public networks.

Advantageously, these aspects enable the credentials to also be used for interactions with non-3GPP networks as asymmetric credentials, even without involving the MNO.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic diagram illustrating a communication network according to embodiments;
Figs. 2, 3, and 4 are flowcharts of methods according to embodiments;
Fig. 5 is a signalling diagram according to an embodiment;
Fig. 6 is a schematic diagram showing functional units of a subscriber module according to an embodiment;
Fig. 7 is a schematic diagram showing functional modules of a subscriber module according to an embodiment;
Fig. 8 is a schematic diagram showing functional units of a provisioning server according to an embodiment;
Fig. 9 is a schematic diagram showing functional modules of a provisioning server according to an embodiment;
Fig. 10 is a schematic diagram showing functional units of a credentials issuer entity according to an embodiment;
Fig. 11 is a schematic diagram showing functional modules of a credentials issuer entity according to an embodiment; and
Fig. 12 shows one example of a computer program product comprising computer readable means according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

The wording that a certain data item or piece of information is obtained by a first device should be construed as that data item or piece of information being retrieved, fetched, received, or otherwise made available to the first device. For example, the data item or piece of information might either be pushed to the first device from a second device or pulled by the first device from a second device. Further, in order for the first device to obtain the data item or piece of information, the first device might be configured to perform a series of operations, possible including interaction with the second device. Such operations, or interactions, might involve a message exchange comprising any of a request message for the data item or piece of information, a response message comprising the data item or piece of information, and an acknowledge message of the data item or piece of information. The request message might be omitted if the data item or piece of information is neither explicitly nor implicitly requested by the first device.

The wording that a certain data item or piece of information is provided by a first device to a second device should be construed as that data item or piece of information being sent or otherwise made available to the second device by the first device. For example, the data item or piece of information might either be pushed to the second device from the first device or pulled by the second device from the second device. Further, in order for the first device to provide the data item or piece of information to the second device, the first device and the second device might be configured to perform a series of operations in order to interact with each other. Such operations, or interaction, might involve a message exchange comprising any of a request message for the data item or piece of information, a response message comprising the data item or piece of information, and an acknowledge message of the data item or piece of information. The request message might be omitted if the data item or piece of information is neither explicitly nor implicitly requested by the second device.

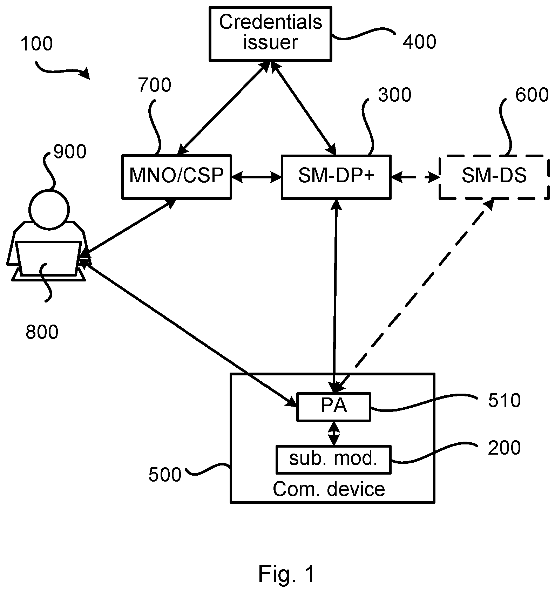

**Fig. 1** is a schematic diagram illustrating a communication network 100 where embodiments presented herein can be applied.

The communication device 500 is the device to which a subscription profile is to be downloaded. The communication device 500 comprises a subscriber module 200, such as an eUICC, supporting remote SIM provisioning according to the GSMA consumer variant and the extension described herein to handle profiles based on asymmetric keys, for example Verifiable Credentials (VCs), or certificates. The subscriber module 200 may, in addition or alternatively, support remote SIM provisioning according to the GSMA eSIM IoT architecture and the extension described herein to handle profiles based on asymmetric keys, where in the GSMA eSIM IoT architecture the remote subscription profile download is based on the consumer variant. The subscriber module 200 contains credentials for secure interaction with both provisioning servers 300, such as SM-DP+ entities, and discovery servers 600, such as SM-DS entities. The subscriber module 200 comprises an Issuer Security Domain - Root (ISD-R), which is the on-card representative of the subscriber module manufacturer (such as eUICC manufacturer, EUM), and handles the profile download and profile management in the subscriber module 200. Each subscription profile is installed into an Issuer Security Domain - Profile (ISD-P), which is the on-card representative of the provisioning server. The ISD-R cannot access information in the ISD-P. When installing a new subscription profile, the ISD-R security domain creates an ISD-P security domain wherein the subscription profile is then installed. The communication device 500 further comprises a Profile Assistant (PA) 510 that assists in profile download and profile management operations. In the eSIM consumer variant this is the Local Profile Assistant (LPA) and in the eSIM IoT variant this is the IoT Profile Assistant (IPA). The PA 510 interacts with the provisioning server 300 for profile download and notification handling and with the device owner 900 via a user interface. The PA 510 may be configured to interact with a discovery server 600 to check for pending profile download events.

An MNO entity 700 (also referred to as a (Communications) Service Provider, (C)SP) provides cellular connectivity for the communication device 500. The device owner 900 orders subscription profiles for the communication device 500 from the MNO entity 700.

An end-user device 800 allows the device owner 900 to interact with e.g., the MNO entity 700 and (optionally) the communication device 500 itself. The end-user device 800 might be user equipment, IoT device, laptop computer, tablet computer, smartphone, or the like.

A provisioning server 300, such as an SM-DP+ entity, handles profile download to the communication device 500 according to the aforementioned documents "SGP.21 - RSP Architecture Specification v2.4", "SGP.22 - RSP Technical Specification v2.4", and/or "SGP.31 - eSIM IoT Architecture and Requirements v1.0" with the extension described herein to handle profiles based on asymmetric keys, such as VCs/certificates. The provisioning server is either operated by the MNO providing the subscription profile to be downloaded or a third party trusted by the MNO entity 700. The provisioning server 300 is certified and has obtained certificates allowing it to be part of the GSMA eSIM ecosystem.

A discovery server 600, such as an SM-DS entity, provides discovery service for use by the communication device 500 according to SGP.21/22. A root discovery server 600 might be common for all communication devices 500 joining the ecosystem. There may, however, also be subsidiary discovery servers 600, and vendor specific discovery servers 600. The discovery server 600 is certified and has obtained certificates allowing it to be part of the GSMA eSIM ecosystem.

A credentials issuer entity 400 is configured to issue credentials, also known as digital identities, such as certificates or VCs for use in subscription profiles for cellular network access authentication. In general terms, VCs are cryptographically secure, privacy respecting and machine-verifiable. A VC has a set of tamper-evident claims and credential metadata that cryptographically proves who issued the VC. The credential metadata has an identifier and a set of properties such as the issuer, expiry data and time, a public key for verification purpose, or the revocation mechanism. Each VC has an issuer, a holder, a verifier, and a verifiable data registry. Each issuer, holder and verifier cryptographically create a Decentralized Identifier (DID; a globally unique cryptographically verifiable identifier, typically public key-based) and associates a set of public keys to their identifier. The issuer's public keys are made publicly available, so that the verifier can validate that a VC presented by the holder has been produced by the issuer. An issuer is typically an organization or entity which creates digitally signed VC to holders. The holder stores the VC. The holder could be a user or a device, such as the subscriber module 200 in the communication device 500. A verifier is an organization or entity which verifies the VC held by the holder. The issuer, holder, and verifier are linked to a verifiable data registry which maintains DIDs/identifiers and schemas. The schemas are data schemas which are used to verify the structure and contents of VCs. It is also used to map the contents of VC and enforce specific structure on a given collection of data. The verifiable data registry could be a trusted database, decentralized database, government ID database, blockchain, or some other secure and accessible service. When a verifier receives a VC from the holder, the verifier can verify the VC structure based on schemas found in the verifiable data registry. The verifier can also verify the integrity of the VC based on the signature created by the issuer. The verifier can further verify the issuer identity from the registry. Finally, the verifier can authenticate the holder based on the identity (e.g., DID) stored in the VC.

The credentials issuer entity 400 could be part of the provisioning server 300, the MNO entity 700, or a trusted third party. The credentials issuer entity 400 is separate from the GSMA certificate issuer which serves as root certificate authority in the GSMA eSIM ecosystem.

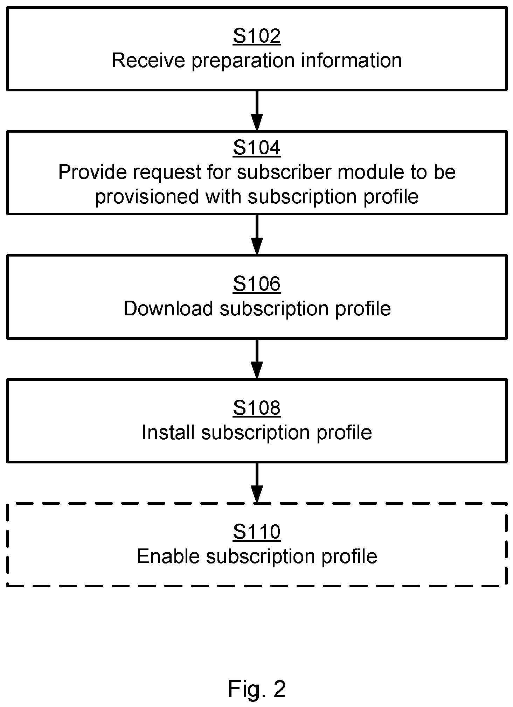

Reference is now made to **Fig. 2** illustrating a method for provisioning of a subscription profile as performed by the subscriber module 200 according to an embodiment.

As will be further disclosed below, the provisioning server 300 provides preparation information to the subscriber module 200. Hence, the subscriber module 200 is configured to perform step S102.

S102: The subscriber module 200 receives, in response to successfully having performed mutual authentication with a provisioning server 300, preparation information from the provisioning server 300. The preparation information comprises an indication of which type of subscription profile that is to be provisioned.

The subscriber module 200 then requests to be provisioned with the subscription profile. Particularly, the subscriber module 200 is configured to perform step S104.

S104: The subscriber module 200 provides a request towards the provisioning server 300 for the subscriber module 200 to be provisioned with the subscription profile. The request comprises a public key of a private-public key pair generated in a security domain of the subscriber module 200 and is digitally signed by a private key of the private-public key pair, producing a first signature. Creation of the security domain is triggered by reception of the indication.

The subscriber module 200 then downloads the subscription profile. Hence, the subscriber module 200 is configured to perform step S106.

S106: The subscriber module 200 downloads the subscription profile from the provisioning server 300. The subscription profile comprises a credential generated as a function of the public key of the private-public key pair and is digitally signed by a credentials issuer entity 400.

The subscriber module 200 then installs the downloaded subscription profile. Hence, the subscriber module 200 is configured to perform step S108.

S108: The subscriber module 200 installs the subscription profile in the security domain of the subscriber module 200.

Embodiments relating to further details of provisioning of a subscription profile as performed by the subscriber module 200 will now be disclosed.

The subscriber module 200 might support provisioning of several types of subscription profiles, such as SIM based subscription profiles and VC/certificate based subscription profiles. The received indication in step S102 might, for example, indicate that a VC or certificate type of subscription profile is to be provisioned. There could be different ways for the subscriber module 200 to receive the indication of which type of subscription profile that is to be provisioned. In some embodiments, the indication of which type of subscription profile that is to be provisioned is received as part of profile metadata of the subscription profile or as part of an smdpSigned2 data structure. In this respect, the preparation data might be split between the metadata and the smdpSigned2 data structure. For example, the indication might be in the metadata, but the transaction identifier (see below) might be in the smdpSigned2 data structure. Then, if the indication of which type of subscription profile that is to be provisioned is part of smdpSigned2 data structure, the subscriber module 200 can validate the request. In particular, in some embodiments, when the indication of which type of subscription profile that is to be provisioned is received as part of an smdpSigned2 data structure, the indication of which type of subscription profile that is to be provisioned is verified as part of the subscriber module 200 verifying the smdpSigned2 data structure.

In some aspects, the subscriber module 200 links the ISD-P Application identifier (AID) with session data identified by the transaction identifier. In particular, in some embodiments, the preparation information comprises a transaction identifier for the provisioning of the subscription profile. Then, when the security domain is created, an application identifier of the security domain can be linked with session data identified by the transaction identifier.

In some aspects, the ISD-R provides the transaction identifier to the ISD-P in a request for generating the private-public key pair. In particular, in some embodiments, the preparation information comprises a transaction identifier for the provisioning of the subscription profile, and the transaction identifier is provided to the security domain when the private-public key pair is to be generated.

There could be different type of requests provided towards the provisioning server 300 in step S104.

In some embodiments, the request is a certificate signing request (CSR) generated in the security domain (ISD-P). The CSR comprises the public key and the transaction identifier. The CSR is signed using the private key of the private-public key pair, producing the first signature. In some embodiments, the request is digitally signed (e.g., by the ISD-R), producing a second signature, by a private key of the subscriber module 200 separate from the private key of the security domain before being provided towards the provisioning server 300.

In some embodiments, the request is, towards the provisioning server 300, provided in euiccSigned2 data of a PrepareDownloadResponse of a GetBoundProfilePackage command. The euiccSigned2 data is digitally signed by the subscriber module 200 (ISD-R), producing the second signature, and the second signature is provided as part of the PrepareDownloadResponse. The euiccSigned2 data might comprise the CSR.

In some aspects, the subscription profile is enabled upon having been downloaded and installed (and stored). Thus, in some embodiments, the subscriber module 200 is configured to perform (optional) step S110:
S110: The subscriber module 200 enables the subscription profile in the subscriber module 200 upon having installed the subscription profile.

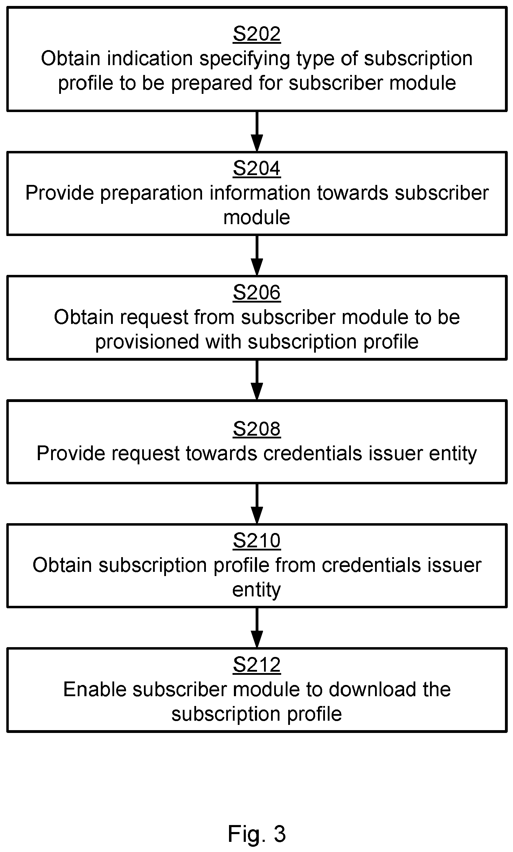

Reference is now made to **Fig. 3** illustrating a method for provisioning of a subscription profile to a subscriber module 200 as performed by the provisioning server 300 according to an embodiment.

It is assumed that the provisioning server 300 receives information of the type of subscription profile for the subscriber module 200. In particular, the provisioning server 300 is configured to perform step S202.

S202: The provisioning server 300 obtains an indication specifying that a type of subscription profile is to be prepared for the subscriber module 200. The indication is part of profile preparation data.

The provisioning server 300 then provides preparation information towards the subscriber module 200 upon successful mutual authentication with the subscriber module 200. In particular, the provisioning server 300 is configured to perform step S204.

S204: The provisioning server 300 provides, in response to successfully having performed mutual authentication with the subscriber module 200, preparation information towards the subscriber module 200. The preparation information comprises an indication of which type of subscription profile that is to be provisioned.

As disclosed above, the subscriber module 200 then requests the provisioning server 300 for the subscriber module 200 to be provisioned with the subscription profile. Hence, the provisioning server 300 is configured to perform step S206.

S206: The provisioning server 300 obtains a request from the subscriber module 200 for the subscriber module 200 to be provisioned with the subscription profile. The request comprises a public key of a private-public key pair generated by the subscriber module 200 and is digitally signed by a private key of the private-public key pair, producing a first signature.

The credential to be used is generated by the credentials issuer entity 400. The credentials issuer entity 400 is therefore provisioned with the request, according to step S208.

S208: The provisioning server 300 provides the request towards a credentials issuer entity 400.

In this, respect, the request provided in step S208 might not be identical to, or not even be of the same format as, the request received by the provisioning server 300 in step S206. Rather, it is only required that the request provided in step S208 conveys the same information as the request received in step S206, i.e., the public key of the private-public key pair generated by the subscriber module 200, and that the request is digitally signed by the private key of the private-public key pair, producing the first signature.

As will be disclosed above, the credential is then provided by the credentials issuer entity 400. Hence, the provisioning server 300 is configured to perform step S210.

S210: The provisioning server 300 obtains the subscription profile from the credentials issuer entity 400. The subscription profile comprises a credential generated as a function of the public key of the private-public key pair and is digitally signed by the credentials issuer entity 400.

The subscriber module 200 may then download the subscription profile. Hence, the provisioning server 300 is configured to perform step S212.

S212: The provisioning server 300 enables the subscriber module 200 to download the subscription profile from the provisioning server 300.

Embodiments relating to further details of provisioning of a subscription profile to a subscriber module 200 as performed by the provisioning server 300 will now be disclosed.

The provisioning server 300 might support preparation and provisioning of several types of subscription profiles, such as SIM based subscription profiles and VC/certificate based subscription profiles. The obtained indication in the preparation data in step S202 might, for example, indicate that a VC or certificate type of subscription profile is to be prepared for the subscriber module 200. In some examples, the profile preparation data further specifies subscription data being any, or any combination of: accepted roaming partners for the subscriber module 200, home mobile network operator of the subscriber module 200, service usage policies for the subscriber module 200, service charging policies for the subscriber module 200, owner of subscription for the subscriber module 200, over the air management keys. In some examples, the information of the owner included any, or any combination of: name, address, date of birth, billing information, etc. In some embodiments, the request as forwarded towards the credentials issuer entity 400 in step S208 further comprises the subscription data.

As disclosed above, in some embodiments, the indication of which type of subscription profile that is to be provisioned is provided as part of profile metadata of the subscription profile or as part of an smdpSigned2 data structure.

As disclosed above, in some embodiments, the request is, from the subscriber module 200, obtained in euiccSigned2 data of a PrepareDownloadResponse of a GetBoundProfilePackage command. The euiccSigned2 data is digitally signed by the subscriber module 200, producing a second signature, and the second signature is provided as part of the PrepareDownloadResponse.

The provisioning server 300 might verify information received in the request from the subscriber module 200 in step S206. Hence, in some embodiments, the request is by the provisioning server 300 verified before is provided towards the credentials issuer entity 400. The verification of the request comprises verification of the second signature.

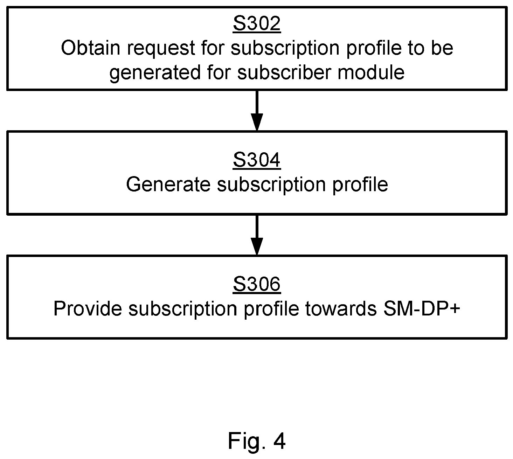

Reference is now made to **Fig. 4** illustrating a method for provisioning of a subscription profile to a subscriber module 200 as performed by the credentials issuer entity 400 according to an embodiment.

As disclosed above, the provisioning server 300 provides the request from the subscriber module 200 for the subscriber module 200 to be provisioned with the subscription profile towards a credentials issuer entity 400. Hence, the credentials issuer entity 400 is configured to perform step S302.

S302: The credentials issuer entity 400 obtains a request from a provisioning server 300 for the subscriber module 200 to be provisioned with the subscription profile. The request comprises a public key of a private-public key pair generated by the subscriber module 200 and is digitally signed by a private key of the private-public key pair, producing a first signature.

The credentials issuer entity 400 then generates the subscription profile, according to step S304.

S304: The credentials issuer entity 400 generates the subscription profile. The subscription profile comprises a credential generated as a function of the public key of the private-public key pair and is digitally signed by the credential issuer entity 400.

The subscription profile is then provided towards the provisioning server 300, according to step S306.

S306: The credentials issuer entity 400 provides the subscription profile towards the provisioning server 300 for provisioning of the subscription profile to the subscriber module 200.

Embodiments relating to further details of provisioning of a subscription profile to a subscriber module 200 as performed by the credentials issuer entity 400 will now be disclosed.

The credentials issuer entity 400 might be part of the provisioning server 300 or the MNO entity 700, or be provided by a third party..

As disclosed above, the request might further comprise subscription data being any, or any combination of: accepted roaming partners for the subscriber module 200, home mobile network operator of the subscriber module 200, service usage policies for the subscriber module 200, service charging policies for the subscriber module 200, owner of subscription for the subscriber module 200, over the air management keys. In some alternatives, the subscription data, or at least part thereof, is not obtained in the request, or not even from the provisioning server 300, but instead from the MNO entity 700. In some embodiments, the subscription profile further is generated as a function of the subscription data.

In some embodiments, the request is by the credentials issuer entity 400 verified before generating the subscription profile. The verification of the request comprises verification of the first signature.

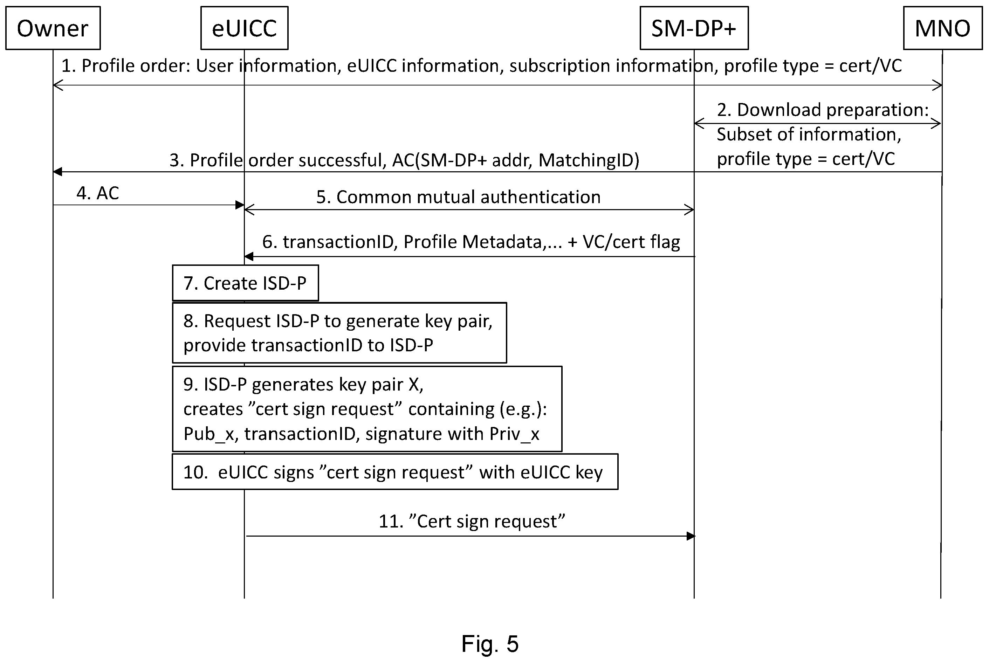

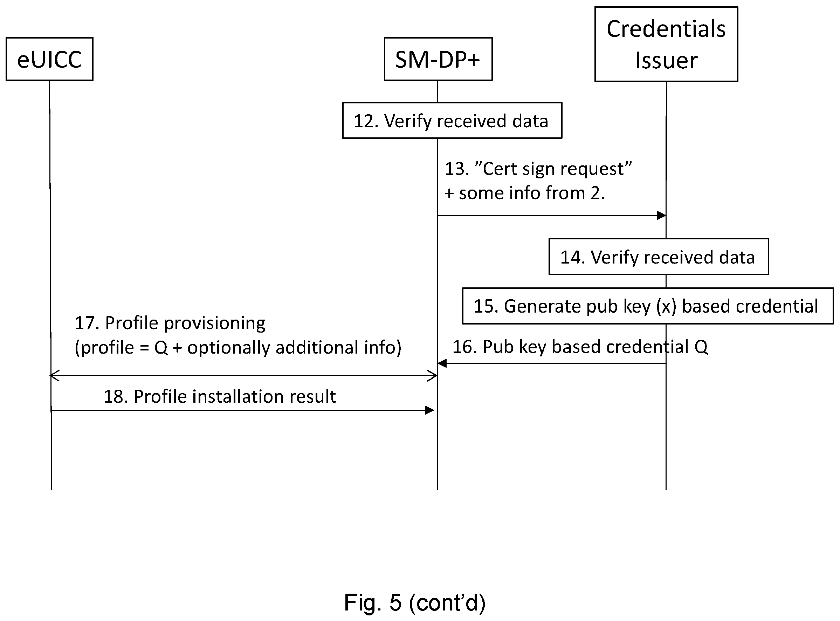

One particular embodiment for provisioning of a subscription profile to a subscriber module 200 based on at least some of the above disclosed embodiments will now be disclosed in detail with reference to the signalling diagram of **Fig. 5****.** In this embodiment, the subscriber module 200 is represented by an eUICC and the provisioning server 300 is represented by an SM-DP+ entity.

With reference to Fig. 5 is described how a subscription profile is ordered, how download of the subscription profile is prepared, and how the actual download and installation of the subscription profile in the eUICC 200 of the communication device 500 is performed. The method follows the standard consumer eSIM procedure with modifications to handle VC/certificate type of credentials instead of, or in addition to, traditional SIM credentials. Both the eUICC 200 and the SM-DP+ entity 300 are provisioned with eSIM credentials for secure subscription profile download according to the consumer eSIM variant. The eUICC eSIM credentials comprises an eUICC private key and an eUICC certificate. The eSIM subscription profile download and installation procedure is handled by the Issuer Security Domain - Root (ISD-R) and Issuer Security Domain - Subscription profile (ISD-P) within the eUICC 200. If nothing else is stated, operations performed by the eUICC 200 are performed within the ISD-R.

Step 1: The device owner 900 orders a subscription profile for the communication device 500. The device owner 900 provides user information and information about the type of requested subscription. In particular, the device owner 900 selects a certificate / VC type of subscription profile. Alternatively, the MNO entity 700 or the SM-DP+ entity 300 determines that a certificate / VC type of subscription profile is to be used. The device owner 900 or MNO entity 700 or the SM-DP+ entity 300 may also provide information about the eUICC 200, such as the eUICC identifier (EID).

Step 2: The MNO entity 700 interacts with the SM-DP+ entity 300 to prepare a subscription profile for download to the eUICC 200. The interaction follows traditional communication over the ES2+ interface and where the parameter subscription profileType is selected by the MNO entity 700 to indicate to the SM-DP+ entity 300 that a certificate/VC type of subscription profile is to be prepared. The MNO entity 700 might also provide data about the subscription, such as roaming and charging policies, accepted roaming partners, service usage policies, identity of the owner of the subscription, such as name, address, date of birth etc. This additional data might be digitally signed by the MNO entity 700, or even encrypted with the public key of the credentials issuer entity 400.

Signing the data by the MNO entity 700 makes it possible for the credentials issuer entity 400 (once it receives the signed data in step 13) to verify the data has not been tampered with and is the data actually provided by the MNO entity 700. If there are trust concerns with respect to the SM-DP+ entity 300, the MNO entity 700 might encrypt the data with the public key of the credentials issuer entity 400. The SM-DP+ entity 300 can then only access the encrypted data, which it can forward to the credentials issuer entity 400 later (step 13), and the credentials issuer entity 400 can decrypt the data using its private key.

Step 3: The MNO entity 700 responds back to the device owner 900, reporting successful subscription profile ordering and provides an Activation Code (AC) that contains the address of the SM-DP+ entity 300 from where the communication device 500 can download the subscription profile and a token, referred to as Matching Id, to be presented to the SM-DP+ entity 300 to retrieve the particular prepared subscription profile.

Step 4: The device owner 900 provides the download information in the AC to the communication device 500. The download information is by the communication device 500 used to start the subscription profile download. For example, the AC can be a quick response (QR) code that can be scanned by the communication device 500 to obtain the information, or the AC might be manually entered in the communication device 500. The received AC can act as a trigger to the communication device 500 to start the download process, or the communication device 500 can store the download information to be used at a later stage when wanting to download the subscription profile.

Step 5: The communication device 500 establishes secure communication and performs a mutual authentication procedure with the SM-DP+ entity 300. eSIM credentials of the communication device 500 and the SM-DP+ entity 300 are leveraged in establishing secure communication and for the mutual authentication. A transactionId is generated by the SM-DP+ entity 300 that is used throughout the subscription profile download and installation process.

Step 6: As a response to successful authentication of the eUICC 200, the SM-DP+ entity 300 provides information for preparation for the download to the communication device 500. This information contains the transactionId and subscription profile metadata. The communication device 500 evaluates with the help of the eUICC 200 the subscription profile metadata to ensure the subscription profile is allowed to be installed in the eUICC 200. In the response, the SM-DP+ entity 300 also indicates to the communication device 500 and eUICC 200 that a Certificate/VC type of subscription profile is to be installed rather than a normal SIM subscription profile. This information (e.g., indicated by a flag being set) may be part of the subscription profile metadata or be part of the smdpSigned2 data structure. If this information is part of the smdpSigned2 data structure then the eUICC 200 can validate the request for certificate/VC type of subscription profile, i.e., know that there is indeed a subscription profile of type VC/certificate waiting for provisioning.

Step 7: Upon successful verification of the data for download preparation and upon discovery of the certificate/VC flag, the eUICC 200 (e.g., the ISD-R) creates a new security domain, ISD-P, in which the subscription profile will be installed and assigns an AID value from the range reserved for ISD-Ps. The certificate/VC flag acts as a trigger for the ISD-R to create the ISD-P at this stage. The eUICC 200 (e.g., the ISD-R) links the ISD-P AID with the session data identified by the transactionId.

Step 8: Upon successful creation of the ISD-P, the eUICC 200 (e.g., the ISD-R) requests the ISD-P to generate a private-public key pair and provides the transactionId to the ISD-P in the request.

Step 9: The eUICC 200 (e.g., the ISD-P) generates a private-public key pair and then generates a CSR. The CSR contains the generated public key and transactionId and is signed using the generated private key. The CSR is returned to the ISD-R.

Here, the CSR is a generic data structure, or message, and not necessarily structured as a traditional public key infrastructure (PKI) CSR.

S10: The eUICC 200 (e.g., the ISD-R) signs the CSR using the eUICC private key that is part of the eSIM credentials of the eUICC 200. The CSR may be part of other signed data such as an ephemeral public key for use in the protection of the subscription profile during download. For example, the CSR might be part of the eUICCSigned2 data structure.

Step 11: The eUICC 200, with the help of the communication device 500, provides the signed CSR to the SM-DP+ entity 300. For example, the communication device 500 might use the command GetBoundProfilePackage to request a subscription profile from the SM-DP+ entity 300 which includes the PrepareDownloadResponse signed by the eUICC 200 (e.g., the ISD-R) which includes the eUICCSigned2 data comprising the CSR.

Step 12: The SM-DP+ entity 300 verifies the received information. For example, if the CSR is part of the signed PrepareDownloadResponse the CSR is verified as part of the SM-DP+ entity verification of the PrepareDownloadResponse. In particular, related to the CSR, successful verification of the received information (PrepareDownloadResponse) proves to the SM-DP+ entity 300 that the CSR and the related private-public key pair was generated on the eUICC 200, and not outside the eUICC 200.

Step 13: The SM-DP+ entity 300 forwards the CSR data, optionally together with data received from MNO entity 700 in step 2, to the credentials issuer entity 400.

The credentials issuer entity 400 could be part of the SM-DP+ entity 300, the MNO entity 700, or a trusted third party. Its role is to issue digital identities, such as certificates or VCs.

Step 14: The credentials issuer entity 400 verifies the received data. This verification comprises verifying the CSR public key based on the signature generated using the correspond private key. It might also comprise verifying that the data about the device owner 900 that the MNO entity 700 provided in step 2 to the SM-DP+ entity 300, and which has then been further provided to the credentials issuer entity 400, has indeed been sent by the MNO entity 700.

Alternatively, the credentials issuer entity 400 could query the MNO entity 700 for additional information of the device owner 900 and subscription over a secure channel (e.g., secured using the TLS protocol). The credentials issuer entity 400 could indicate the device owner 900 via the eSIM public key of the eUICC 200, which the SM-DP+ entity 300 would have to provide to the credentials issuer entity 400 together with the CSR, or that would be part of the CSR. The SM-DP+ entity 300 may for example provide the complete PrepareDownloadResponse signed by the eUICC 200 and that includes the eUICC certificate. This allows the credentials issuer entity 400, if configured with the certificate issuer (root) public key/certificate to verify that the CSR actually comes for the particular communication device 500 with the eUICC 200 identified by a particular EID. This also provides proof to the credentials issuer entity 400 that the private-public key pair was generated in the eUICC 200.

Step 15: Once the data to be used as part of the credential has been verified, the credentials issuer entity 400 generates the credential, e.g., a VC or a certificate, based on the ISD-P generated public key and data about the device owner 900 and subscription received directly or indirectly from the MNO entity 700. The credentials issuer entity 400 acts as VC issuer/ PKI Certificate Authority and signs the credential and the data contained within.

Step 16: The credentials issuer entity 400 provides the newly generated credential to the SM-DP+ entity 300.

Step 17: The SM-DP+ entity 300 and the eUICC 200 executes a provisioning protocol to provision a subscription profile to the ISD-P in the eUICC 200. The subscription profile is now the credential generated by the credentials issuer entity 400, but is handled as a typical subscription profile with respect to it being protected before transfer and actual provisioning. For example, the subscription profile might be protected and provided according to the Bound Profile Package (BPP) format. In addition to the credential, the subscription profile might also carry some additional data, such as MNO over the air keys, which in a traditional SIM subscription profile would be part of the subscription profile.

Since such keys should be kept secret, they might not be included in the VC/certificate as it will be presented to verifiers of the identity and the over the air keys would thus be revealed unless the eUICC 200 implements functionality to selectively reveal or not reveal certain pieces of data in the VC/certificate (e.g., when sent to the verifier).

The eUICC 200 performs traditional subscription profile verification and installation with the addition that the ISD-P verifies that the VC/certificate matches the public key that it generated in step 9.

Step 18: The eUICC 200 provides a subscription profile installation result to the SM-DP+ entity 300 to indicate the result of the subscription profile provisioning and that the process has completed.

As disclosed above, the subscription profile download and installation is, according to the present embodiment, triggered by the owner 900 providing download information (SM-DP+ entity information and Matching Id) to the communication device 500 using an Activation Code. Other options as defined in GSMA SGP.22 are also possible. For example, the address to the SM-DP+ entity 300 from where to download the subscription profile might be pre-configured in the communication device 500 or eUICC 200 and the owner 900 (or the communication device 500 itself) triggers the download. For example, the owner 900 (or the communication device 500 itself) might trigger the communication device 500 to connect to an SM-DS entity 600 from where the download information is obtained and the used in the subscription profile download and installation procedure. Yet another option, as described in the aforementioned document "SGP.31 - eSIM IoT Architecture and Requirements v1.0", is for an eSIM IoT remote Manager (eIM) to provide the AC to the communication device 500 and to trigger profile download on behalf of the device owner 900. If the communication device 500 is constrained in terms of, for example, network capacity, energy, and/or memory such that the communication device 500 cannot directly communicate with the SM-DP+ entity 300, any communication between the communication device 500 and the SM-DP+ entity 300 may occur via the eIM. In this case, the eIM relays messages between the communication device 500 and the SM-DP+ entity 300 leveraging a protocol stack between the communication device 500 and the eIM suitable for constrained IoT devices, such as LwM2M over DTLS over CoAP over UDP, where LwM2M is short for lightweight machine to machine, where DTLS is short for Datagram Transport Layer Security, where CoAP is short for Constrained Application Protocol, and where UDP is short for User Datagram Protocol.

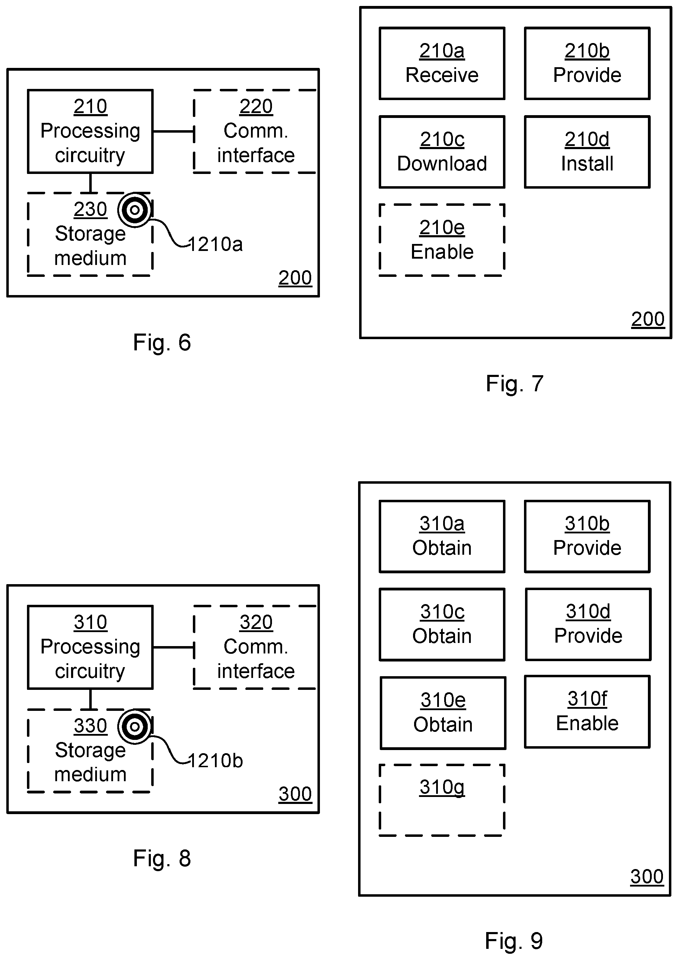

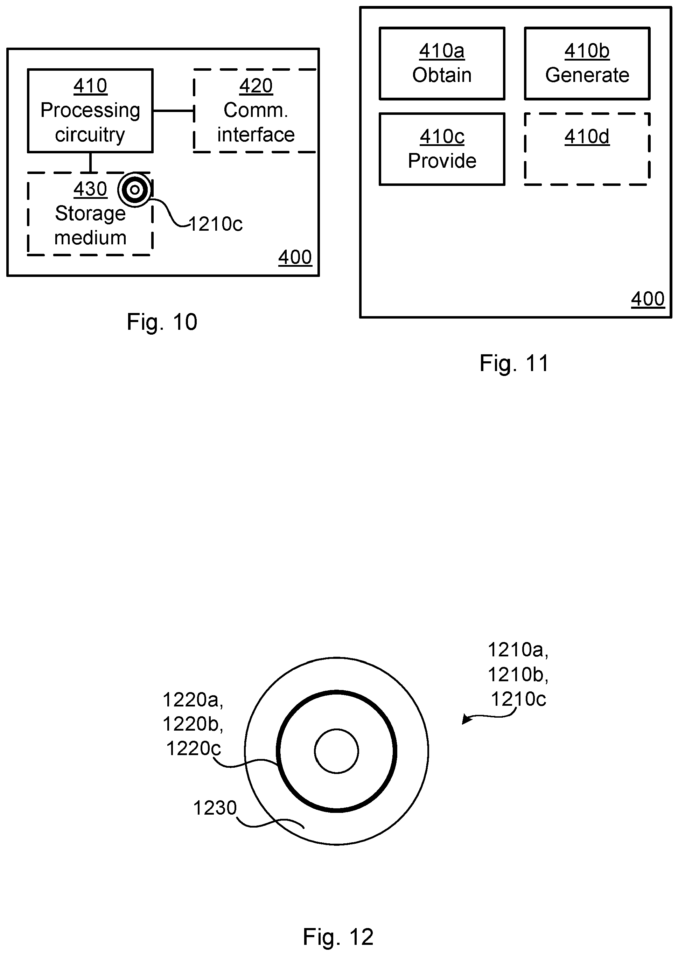

**Fig. 6** schematically illustrates, in terms of a number of functional units, the components of a subscriber module 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 1210a (as in Fig. 12), e.g. in the form of a storage medium 230. The processing circuitry 210 may further be provided as at least one application specific integrated circuit (ASIC), or field programmable gate array (FPGA).

Particularly, the processing circuitry 210 is configured to cause the subscriber module 200 to perform a set of operations, or steps, as disclosed above. For example, the storage medium 230 may store the set of operations, and the processing circuitry 210 may be configured to retrieve the set of operations from the storage medium 230 to cause the subscriber module 200 to perform the set of operations. The set of operations may be provided as a set of executable instructions. Thus the processing circuitry 210 is thereby arranged to execute methods as herein disclosed.

The storage medium 230 may also comprise persistent storage, which, for example, can be any single one or combination of magnetic memory, optical memory, solid state memory or even remotely mounted memory.

The subscriber module 200 may further comprise a communications interface 220 for communications with other entities, functions, nodes, and devices, as in Fig. 1. As such the communications interface 220 may comprise one or more transmitters and receivers, comprising analogue and digital components.

The processing circuitry 210 controls the general operation of the subscriber module 200 e.g. by sending data and control signals to the communications interface 220 and the storage medium 230, by receiving data and reports from the communications interface 220, and by retrieving data and instructions from the storage medium 230. Other components, as well as the related functionality, of the subscriber module 200 are omitted in order not to obscure the concepts presented herein.

**Fig. 7** schematically illustrates, in terms of a number of functional modules, the components of a subscriber module 200 according to an embodiment. The subscriber module 200 of Fig. 7 comprises a number of functional modules; a receive module 210a configured to perform step S102, a provide module 210b configured to perform step S104, a download module 210c configured to perform step S106, and an install module 210d configured to perform step S108. The subscriber module 200 of Fig. 7 may further comprise a number of optional functional modules, such as an enable module 210e configured to perform step S110. In general terms, each functional module 210a:210e may be implemented in hardware or in software. Preferably, one or more or all functional modules 210a:210e may be implemented by the processing circuitry 210, possibly in cooperation with the communications interface 220 and the storage medium 230. The processing circuitry 210 may thus be arranged to from the storage medium 230 fetch instructions as provided by a functional module 210a:210e and to execute these instructions, thereby performing any steps of the subscriber module 200 as disclosed herein.

**Fig. 8** schematically illustrates, in terms of a number of functional units, the components of a provisioning server 300 according to an embodiment. Processing circuitry 310 is provided using any combination of one or more of a suitable central processing unit (CPU), multiprocessor, microcontroller, digital signal processor (DSP), etc., capable of executing software instructions stored in a computer program product 1210b (as in Fig. 12), e.g. in the form of a storage medium 330. The processing circuitry 310 may further be provided as at least one application specific integrated circuit (ASIC), or field programmable gate array (FPGA).

Particularly, the processing circuitry 310 is configured to cause the provisioning server 300 to perform a set of operations, or steps, as disclosed above. For example, the storage medium 330 may store the set of operations, and the processing circuitry 310 may be configured to retrieve the set of operations from the storage medium 330 to cause the provisioning server 300 to perform the set of operations. The set of operations may be provided as a set of executable instructions. Thus the processing circuitry 310 is thereby arranged to execute methods as herein disclosed.

The storage medium 330 may also comprise persistent storage, which, for example, can be any single one or combination of magnetic memory, optical memory, solid state memory or even remotely mounted memory.

The provisioning server 300 may further comprise a communications interface 320 for communications with other entities, functions, nodes, and devices, as in Fig. 1. As such the communications interface 320 may comprise one or more transmitters and receivers, comprising analogue and digital components.

The processing circuitry 310 controls the general operation of the provisioning server 300 e.g. by sending data and control signals to the communications interface 320 and the storage medium 330, by receiving data and reports from the communications interface 320, and by retrieving data and instructions from the storage medium 330. Other components, as well as the related functionality, of the provisioning server 300 are omitted in order not to obscure the concepts presented herein.

**Fig. 9** schematically illustrates, in terms of a number of functional modules, the components of a provisioning server 300 according to an embodiment. The provisioning server 300 of Fig. 9 comprises a number of functional modules; an obtain module 310a configured to perform step S202, a provide module 310b configured to perform step S204, an obtain module 310c configured to perform step S206, a provide module 310d configured to perform step S208, an obtain module 310e configured to perform step S210, and an enable module 310f configured to perform step S212. The provisioning server 300 of Fig. 9 may further comprise a number of optional functional modules, as represented by functional module 310g. In general terms, each functional module 310a:310g may be implemented in hardware or in software. Preferably, one or more or all functional modules 310a:310g may be implemented by the processing circuitry 310, possibly in cooperation with the communications interface 320 and the storage medium 330. The processing circuitry 310 may thus be arranged to from the storage medium 330 fetch instructions as provided by a functional module 310a:310g and to execute these instructions, thereby performing any steps of the provisioning server 300 as disclosed herein.

**Fig. 10** schematically illustrates, in terms of a number of functional units, the components of a credentials issuer entity 400 according to an embodiment. Processing circuitry 410 is provided using any combination of one or more of a suitable central processing unit (CPU), multiprocessor, microcontroller, digital signal processor (DSP), etc., capable of executing software instructions stored in a computer program product 1210c (as in Fig. 12), e.g. in the form of a storage medium 430. The processing circuitry 410 may further be provided as at least one application specific integrated circuit (ASIC), or field programmable gate array (FPGA).

Particularly, the processing circuitry 410 is configured to cause the credentials issuer entity 400 to perform a set of operations, or steps, as disclosed above. For example, the storage medium 430 may store the set of operations, and the processing circuitry 410 may be configured to retrieve the set of operations from the storage medium 430 to cause the credentials issuer entity 400 to perform the set of operations. The set of operations may be provided as a set of executable instructions. Thus the processing circuitry 410 is thereby arranged to execute methods as herein disclosed.

The storage medium 430 may also comprise persistent storage, which, for example, can be any single one or combination of magnetic memory, optical memory, solid state memory or even remotely mounted memory.

The credentials issuer entity 400 may further comprise a communications interface 420 for communications with other entities, functions, nodes, and devices, as in Fig. 1. As such the communications interface 420 may comprise one or more transmitters and receivers, comprising analogue and digital components.

The processing circuitry 410 controls the general operation of the credentials issuer entity 400 e.g. by sending data and control signals to the communications interface 420 and the storage medium 430, by receiving data and reports from the communications interface 420, and by retrieving data and instructions from the storage medium 430. Other components, as well as the related functionality, of the credentials issuer entity 400 are omitted in order not to obscure the concepts presented herein.

**Fig. 11** schematically illustrates, in terms of a number of functional modules, the components of a credentials issuer entity 400 according to an embodiment. The credentials issuer entity 400 of Fig. 11 comprises a number of functional modules; an obtain module 410a configured to perform step S302, a generate module 410b configured to perform step S304, and a provide module 410c configured to perform step S306. The credentials issuer entity 400 of Fig. 11 may further comprise a number of optional functional modules, as represented by functional module 410d. In general terms, each functional module 410a:410d may be implemented in hardware or in software. Preferably, one or more or all functional modules 410a:410d may be implemented by the processing circuitry 410, possibly in cooperation with the communications interface 420 and the storage medium 430. The processing circuitry 410 may thus be arranged to from the storage medium 430 fetch instructions as provided by a functional module 410a:410d and to execute these instructions, thereby performing any steps of the credentials issuer entity 400 as disclosed herein.

**Fig. 12** shows one example of a computer program product 1210a, 1210b, 1210c comprising computer readable means 1230. On this computer readable means 1230, a computer program 1220a can be stored, which computer program 1220a can cause the processing circuitry 210 and thereto operatively coupled entities and devices, such as the communications interface 220 and the storage medium 230, to execute methods according to embodiments described herein. The computer program 1220a and/or computer program product 1210a may thus provide means for performing any steps of the subscriber module 200 as herein disclosed. On this computer readable means 1230, a computer program 1220b can be stored, which computer program 1220b can cause the processing circuitry 310 and thereto operatively coupled entities and devices, such as the communications interface 320 and the storage medium 330, to execute methods according to embodiments described herein. The computer program 1220b and/or computer program product 1210b may thus provide means for performing any steps of the provisioning server 300 as herein disclosed. On this computer readable means 1230, a computer program 1220c can be stored, which computer program 1220c can cause the processing circuitry 410 and thereto operatively coupled entities and devices, such as the communications interface 420 and the storage medium 430, to execute methods according to embodiments described herein. The computer program 1220c and/or computer program product 1210c may thus provide means for performing any steps of the credentials issuer entity 400 as herein disclosed.

In the example of Fig. 12, the computer program product 1210a, 1210b, 1210c is illustrated as an optical disc, such as a CD (compact disc) or a DVD (digital versatile disc) or a Blu-Ray disc. The computer program product 1210a, 1210b, 1210c could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 1220a, 1220b, 1220c is here schematically shown as a track on the depicted optical disk, the computer program 1220a, 1220b, 1220c can be stored in any way which is suitable for the computer program product 1210a, 1210b, 1210c.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method for provisioning of a subscription profile, the method being performed by a subscriber module (200), the method comprising:
receiving (S102), in response to successfully having performed mutual authentication with a provisioning server (300), preparation information from the provisioning server (300), wherein the preparation information comprises an indication of which type of subscription profile that is to be provisioned;
providing (S104) a request towards the provisioning server (300) for the subscriber module (200) to be provisioned with the subscription profile, wherein the request comprises a public key of a private-public key pair generated in a security domain of the subscriber module (200) and is digitally signed by a private key of the private-public key pair, producing a first signature, and wherein creation of the security domain is triggered by reception of the indication;
downloading (S106) the subscription profile from the provisioning server (300), wherein the subscription profile comprises a credential generated as a function of the public key of the private-public key pair and is digitally signed by a credentials issuer entity (400); and
installing (S108) the subscription profile in the security domain of the subscriber module (200).

2. The method according to claim 1, wherein the indication of which type of subscription profile that is to be provisioned is received as part of profile metadata of the subscription profile or as part of an smdpSigned2 data structure.

3. The method according to claim 1, wherein, when the indication of which type of subscription profile that is to be provisioned is received as part of an smdpSigned2 data structure, the indication of which type of subscription profile that is to be provisioned is verified as part of the subscriber module (200) verifying the smdpSigned2 data structure.

4. The method according to any preceding claim, wherein the preparation information comprises a transaction identifier for the provisioning of the subscription profile, and wherein, when the security domain is created, an application identifier of the security domain is linked with session data identified by the transaction identifier.

5. The method according to any preceding claim, wherein the preparation information comprises a transaction identifier for the provisioning of the subscription profile, and wherein, the transaction identifier is provided to the security domain when the private-public key pair is to be generated.

6. The method according to claim 4, wherein the request is a certificate signing request, CSR, generated in the security domain, wherein the CSR comprises the public key and the transaction identifier, and wherein the CSR is signed using the private key of the private-public key pair producing the first signature.

7. The method according to any preceding claim, wherein the request is digitally signed, producing a second signature, by a private key of the subscriber module (200) separate from the private key of the security domain before being provided towards the provisioning server (300).

8. The method according to claim 7, wherein the request is, towards the provisioning server (300), provided in euiccSigned2 data of a PrepareDownloadResponse of a GetBoundProfilePackage command, wherein the euiccSigned2 data is digitally signed by the subscriber module (200) producing the second signature, and the second signature is provided as part of the PrepareDownloadResponse.

9. The method according to any preceding claim, wherein the method further comprises:
enabling (S110) the subscription profile in the subscriber module (200) upon having installed the subscription profile.

10. A method for provisioning of a subscription profile to a subscriber module (200), the method being performed by a provisioning server (300), the method comprising:
obtaining (S202) an indication specifying that a type of subscription profile is to be prepared for the subscriber module (200), wherein the indication is part of profile preparation data;
providing (S204), in response to successfully having performed mutual authentication with the subscriber module (200), preparation information towards the subscriber module (200), wherein the preparation information comprises an indication of which type of subscription profile that is to be provisioned;
obtaining (S206) a request from the subscriber module (200) for the subscriber module (200) to be provisioned with the subscription profile, wherein the request comprises a public key of a private-public key pair generated by the subscriber module (200) and is digitally signed by a private key of the private-public key pair, producing a first signature;
providing (S208) the request towards a credentials issuer entity (400);
obtaining (S210) the subscription profile from the credentials issuer entity (400), wherein the subscription profile comprises a credential generated as a function of the public key of the private-public key pair and is digitally signed by the credentials issuer entity (400); and
enabling (S212) the subscriber module (200) to download the subscription profile from the provisioning server (300).

11. The method according to claim 10, wherein the profile preparation data further specifies subscription data being any, or any combination of: accepted roaming partners for the subscriber module (200), home mobile network operator of the subscriber module (200), service usage policies for the subscriber module (200), owner of subscription for the subscriber module (200).

12. The method according to claim 10 or 11, wherein the indication of which type of subscription profile that is to be provisioned is provided as part of profile metadata of the subscription profile or as part of an smdpSigned2 data structure.

13. A method for provisioning of a subscription profile to a subscriber module (200), the method being performed by a credentials issuer entity (400), the method comprising:
obtaining (S302) a request from a provisioning server (300) for the subscriber module (200) to be provisioned with the subscription profile, wherein the request comprises a public key of a private-public key pair generated by the subscriber module (200) and is digitally signed by a private key of the private-public key pair, producing a first signature;
generating (S304) the subscription profile, wherein the subscription profile comprises a credential generated as a function of the public key of the private-public key pair and is digitally signed by the credential issuer entity (400); and
providing (S306) the subscription profile towards the provisioning server (300) for provisioning of the subscription profile to the subscriber module (200).

14. A subscriber module (200) for provisioning of a subscription profile, the subscriber module (200) comprising processing circuitry (210), the processing circuitry being configured to cause the subscriber module (200) to:
receive, in response to successfully having performed mutual authentication with a provisioning server (300), preparation information from the provisioning server (300), wherein the preparation information comprises an indication of which type of subscription profile that is to be provisioned;
provide a request towards the provisioning server (300) for the subscriber module (200) to be provisioned with the subscription profile, wherein the request comprises a public key of a private-public key pair generated in a security domain of the subscriber module (200) and is digitally signed by a private key of the private-public key pair, producing a first signature, and wherein creation of the security domain is triggered by reception of the indication;
download the subscription profile from the provisioning server (300), wherein the subscription profile comprises a credential generated as a function of the public key of the private-public key pair and is digitally signed by a credentials issuer entity (400); and
install the subscription profile in the security domain of the subscriber module (200).

15. A provisioning server (300) for provisioning of a subscription profile to a subscriber module (200), the provisioning server (300) comprising processing circuitry (310), the processing circuitry being configured to cause the provisioning server (300) to:
obtain (S202) an indication specifying that a type of subscription profile is to be prepared for the subscriber module (200), wherein the indication is part of profile preparation data;
provide, in response to successfully having performed mutual authentication with the subscriber module (200), preparation information towards the subscriber module (200), wherein the preparation information comprises an indication of which type of subscription profile that is to be provisioned;
obtain a request from the subscriber module (200) for the subscriber module (200) to be provisioned with the subscription profile, wherein the request comprises a public key of a private-public key pair generated by the subscriber module and is digitally signed by a private key of the private-public key pair, producing a first signature;
provide the request towards a credentials issuer entity (400);
obtain the subscription profile from the credentials issuer entity (400), wherein the subscription profile comprises a credential generated as a function of the public key of the private-public key pair and is digitally signed by the credentials issuer entity (400); and
enable the subscriber module (200) to download the subscription profile from the provisioning server (300).

16. A credentials issuer entity (400) for provisioning of a subscription profile to a subscriber module (200), the credentials issuer entity (400) comprising processing circuitry (410), the processing circuitry being configured to cause the credentials issuer entity (400) to:
obtain a request from a provisioning server (300) for the subscriber module (200) to be provisioned with the subscription profile, wherein the request comprises a public key of a private-public key pair generated by the subscriber module and is digitally signed by a private key of the private-public key pair, producing a first signature;
generate the subscription profile, wherein the subscription profile comprises a credential generated as a function of the public key of the private-public key pair and is digitally signed by the credential issuer entity (400); and
provide the subscription profile towards the provisioning server (300) for provisioning of the subscription profile to the subscriber module (200).

## Patentansprüche

1. Verfahren zur Bereitstellung eines Abonnementprofils, wobei das Verfahren von einem Teilnehmermodul (200) durchgeführt wird, wobei das Verfahren Folgendes umfasst:
Empfangen (S102) von Vorbereitungsinformationen von einem Bereitstellungsserver (300) in Reaktion auf eine erfolgreiche Durchführung gegenseitiger Authentifizierung mit dem Bereitstellungsserver (300), wobei die Vorbereitungsinformationen eine Angabe dessen umfassen, welche Art von Abonnementprofil bereitgestellt werden soll;
Bereitstellen (S104) einer Anforderung an den Bereitstellungsserver (300), dass dem Teilnehmermodul (200) das Abonnementprofil bereitgestellt werden soll, wobei die Anforderung einen öffentlichen Schlüssel eines Paares eines privaten und eines öffentlichen Schlüssels umfasst, der in einer Sicherheitsdomäne des Teilnehmermoduls (200) generiert wurde und mit einem privaten Schlüssel des Paares des privaten und des öffentlichen Schlüssels digital signiert ist, wodurch eine erste Signatur erzeugt wird, und wobei die Erstellung der Sicherheitsdomäne durch den Empfang der Angabe ausgelöst wird;
Herunterladen (S106) des Abonnementprofils vom Bereitstellungsserver (300), wobei das Abonnementprofil Anmeldeinformationen umfasst, die als Funktion des öffentlichen Schlüssels des Paares des privaten und des öffentlichen Schlüssels generiert wurden und von einer Anmeldeinformationsausstellerentität (400) digital signiert sind; und
Installieren (S108) des Abonnementprofils in der Sicherheitsdomäne des Teilnehmermoduls (200).

2. Verfahren nach Anspruch 1, wobei die Angabe dessen, welche Art von Abonnementprofil bereitgestellt werden soll, als Teil von Profil-Metadaten des Abonnementprofils oder als Teil einer smdp-Signed2-Datenstruktur empfangen wird.

3. Verfahren nach Anspruch 1, wobei, wenn die Angabe dessen, welche Art von Abonnementprofil bereitgestellt werden soll, als Teil einer smdp-Signed2-Datenstruktur empfangen wird, die Angabe dessen, welche Art von Abonnementprofil bereitgestellt werden soll, als Teil der Überprüfung der smdp-Signed2-Datenstruktur durch das Teilnehmermodul (200) überprüft wird.

4. Verfahren nach einem der vorhergehenden Ansprüche, wobei die Vorbereitungsinformationen eine Transaktionskennung für die Bereitstellung des Abonnementprofils umfassen und wobei, wenn die Sicherheitsdomäne erstellt wird, eine Anwendungskennung der Sicherheitsdomäne mit Sitzungsdaten verknüpft wird, die durch die Transaktionskennung identifiziert werden.

5. Verfahren nach einem der vorhergehenden Ansprüche, wobei die Vorbereitungsinformationen eine Transaktionskennung für die Bereitstellung des Abonnementprofils umfassen und wobei die Transaktionskennung der Sicherheitsdomäne bereitgestellt wird, wenn das Paar des privaten und des öffentlichen Schlüssels generiert werden soll.

6. Verfahren nach Anspruch 4, wobei die Anforderung eine Zertifikatssignierungsanforderung, CSR, ist, die in der Sicherheitsdomäne generiert wird, wobei die CSR den öffentlichen Schlüssel und die Transaktionskennung umfasst, und wobei die CSR unter Verwendung des privaten Schlüssels des Paares des privaten und des öffentlichen Schlüssels signiert wird, wodurch die erste Signatur erzeugt wird.

7. Verfahren nach einem der vorhergehenden Ansprüche, wobei die Anforderung mit einem privaten Schlüssel des Teilnehmermoduls (200) getrennt vom privaten Schlüssel der Sicherheitsdomäne vor der Bereitstellung an den Bereitstellungsserver (300) digital signiert wird, wodurch eine zweite Signatur erzeugt wird.

8. Verfahren nach Anspruch 7, wobei die Anforderung dem Bereitstellungsserver (300) in euiccSigned2-Daten einer PrepareDownloadResponse eines GetBoundProfilePackage-Befehls bereitgestellt wird, wobei die euiccSigned2-Daten vom Teilnehmermodul (200) digital signiert werden, wodurch die zweite Signatur erzeugt wird, und die zweite Signatur als Teil der PrepareDownloadResponse bereitgestellt wird.

9. Verfahren nach einem der vorstehenden Ansprüche, wobei das Verfahren ferner Folgendes umfasst:
Aktivieren (S110) des Abonnementprofils in dem Teilnehmermodul (200) nach dem Installieren des Abonnementprofils.

10. Verfahren zur Bereitstellung eines Abonnementprofils an ein Teilnehmermodul (200), wobei das Verfahren von einem Bereitstellungsserver (300) durchgeführt wird, wobei das Verfahren Folgendes umfasst:
Erhalten (S202) einer Angabe, die spezifiziert, dass eine Art von Abonnementprofil für das Teilnehmermodul (200) vorbereitet werden soll, wobei die Angabe Teil von Profilvorbereitungsdaten ist;
Bereitstellen (S204) von Vorbereitungsinformationen an das Teilnehmermodul (200) in Reaktion auf eine erfolgreiche Durchführung gegenseitiger Authentifizierung mit dem Teilnehmermodul (200), wobei die Vorbereitungsinformationen eine Angabe dessen umfassen, welche Art von Abonnementprofil bereitgestellt werden soll;
Erhalten (S206) einer Anforderung von dem Teilnehmermodul (200), dass dem Teilnehmermodul (200) das Abonnementprofil bereitgestellt werden soll, wobei die Anforderung einen öffentlichen Schlüssel eines Paares eines privaten und eines öffentlichen Schlüssels umfasst, der von dem Teilnehmermodul (200) generiert wurde und mit einem privaten Schlüssel des Paares des privaten und des öffentlichen Schlüssels digital signiert ist, wodurch eine erste Signatur erzeugt wird;
Bereitstellen (S208) der Anforderung an eine Anmeldeinformationsausstellerentität (400);
Erhalten (S210) des Abonnementprofils von der Anmeldeinformationsausstellerentität (400), wobei das Abonnementprofil Anmeldeinformationen umfasst, die als Funktion des öffentlichen Schlüssels des Paares des privaten und des öffentlichen Schlüssels generiert wurden und von einer Anmeldeinformationsausstellerentität (400) signiert sind; und
Ermöglichen (S212), dass das Teilnehmermodul (200) das Abonnementprofil vom Bereitstellungsserver (300) herunterlädt.

11. Verfahren nach Anspruch 10, wobei die Profilvorbereitungsdaten ferner Abonnementdaten spezifizieren, bei denen es sich um eines oder eine beliebige Kombination von Folgenden handelt: akzeptierte Roaming-Partner für das Teilnehmermodul (200), einen Heimat-Mobilfunkbetreiber des Teilnehmermoduls (200); Dienstnutzungsrichtlinien für das Teilnehmermodul (200), einen Inhaber des Abonnements für das Teilnehmermodul (200).

12. Verfahren nach Anspruch 10 oder 11, wobei die Angabe dessen, welche Art von Abonnementprofil bereitgestellt werden soll, als Teil von Profil-Metadaten des Abonnementprofils oder als Teil einer smdp-Signed2-Datenstruktur bereitgestellt wird.

13. Verfahren zur Bereitstellung eines Abonnementprofils an ein Teilnehmermodul (200), wobei das Verfahren von einer Anmeldeinformationsausstellerentität (400) durchgeführt wird, wobei das Verfahren Folgendes umfasst:
Erhalten (S302) einer Anforderung von einem Bereitstellungsserver (300), dass dem Teilnehmermodul (200) das Abonnementprofil bereitgestellt werden soll, wobei die Anforderung einen öffentlichen Schlüssel eines Paares eines privaten und eines öffentlichen Schlüssels umfasst, der von dem Teilnehmermodul (200) generiert wurde und mit einem privaten Schlüssel des Paares des privaten und des öffentlichen Schlüssels digital signiert ist, wodurch eine erste Signatur erzeugt wird;
Generieren (S304) des Abonnementprofils, wobei das Abonnementprofil Anmeldeinformationen umfasst, die als Funktion des öffentlichen Schlüssels des Paares des privaten und des öffentlichen Schlüssels generiert wurden und von der Anmeldeinformationsausstellerentität (400) signiert sind; und
Bereitstellen (S306) des Abonnementprofils an den Bereitstellungsserver (300) zum Bereitstellen des Abonnementprofils an das Teilnehmermodul (200).

14. Teilnehmermodul (200) zum Bereitstellen eines Abonnementprofils, wobei das Teilnehmermodul (200) Verarbeitungsschaltungsanordnung (210) umfasst und die Verarbeitungsschaltungsanordnung dazu konfiguriert ist, das Teilnehmermodul (200) zu Folgendem zu veranlassen:
Empfangen von Vorbereitungsinformationen von einem Bereitstellungsserver (300) in Reaktion auf eine erfolgreiche Durchführung gegenseitiger Authentifizierung mit dem Bereitstellungsserver (300), wobei die Vorbereitungsinformationen eine Angabe dessen umfassen, welche Art von Abonnementprofil bereitgestellt werden soll;
Bereitstellen einer Anforderung an den Bereitstellungsserver (300), dass dem Teilnehmermodul (200) das Abonnementprofil bereitgestellt werden soll, wobei die Anforderung einen öffentlichen Schlüssel eines Paares eines privaten und eines öffentlichen Schlüssels umfasst, der in einer Sicherheitsdomäne des Teilnehmermoduls (200) generiert wurde und mit einem privaten Schlüssel des Paares des privaten und des öffentlichen Schlüssels digital signiert ist, wodurch eine erste Signatur erzeugt wird, und wobei die Erstellung der Sicherheitsdomäne durch den Empfang der Angabe ausgelöst wird;
Herunterladen des Abonnementprofils vom Bereitstellungsserver (300), wobei das Abonnementprofil Anmeldeinformationen umfasst, die als Funktion des öffentlichen Schlüssels des Paares des privaten und des öffentlichen Schlüssels generiert wurden und von einer Anmeldeinformationsausstellerentität (400) signiert sind; und
Installieren des Abonnementprofils in der Sicherheitsdomäne des Teilnehmermoduls (200).

15. Bereitstellungsserver (300) zum Bereitstellen eines Abonnementprofils an ein Teilnehmermodul (200), wobei der Bereitstellungsserver (300) Verarbeitungsschaltungsanordnung (310) umfasst und die Verarbeitungsschaltungsanordnung dazu konfiguriert ist, das Teilnehmermodul (300) zu Folgendem zu veranlassen:
Erhalten (S202) einer Angabe, die spezifiziert, dass eine Art von Abonnementprofil für das Teilnehmermodul (200) vorbereitet werden soll, wobei die Angabe Teil von Profilvorbereitungsdaten ist;
Bereitstellen von Vorbereitungsinformationen an das Teilnehmermodul (200) in Reaktion auf eine erfolgreiche Durchführung gegenseitiger Authentifizierung mit dem Teilnehmermodul (200), wobei die Vorbereitungsinformationen eine Angabe dessen umfassen, welche Art von Abonnementprofil bereitgestellt werden soll;
Erhalten einer Anforderung von dem Teilnehmermodul (200), dass dem Teilnehmermodul (200) das Abonnementprofil bereitgestellt werden soll, wobei die Anforderung einen öffentlichen Schlüssel eines Paares eines privaten und eines öffentlichen Schlüssels umfasst, der von dem Teilnehmermodul generiert wurde und mit einem privaten Schlüssel des Paares des privaten und des öffentlichen Schlüssels digital signiert ist, wodurch eine erste Signatur erzeugt wird;
Bereitstellen der Anforderung an eine Anmeldeinformationsausstellerentität (400);
Erhalten des Abonnementprofils von der Anmeldeinformationsausstellerentität (400), wobei das Abonnementprofil Anmeldeinformationen umfasst, die als Funktion des öffentlichen Schlüssels des Paares des privaten und des öffentlichen Schlüssels generiert wurden und von einer Anmeldeinformationsausstellerentität (400) signiert sind; und
Ermöglichen, dass das Teilnehmermodul (200) das Abonnementprofil vom Bereitstellungsserver (300) herunterlädt.

16. Anmeldeinformationsausstellerentität (400) zum Bereitstellen eines Abonnementprofils an ein Teilnehmermodul (200), wobei die Anmeldeinformationsausstellerentität (400) Verarbeitungsschaltungsanordnung (410) umfasst und die Verarbeitungsschaltungsanordnung dazu konfiguriert ist, die Anmeldeinformationsausstellerentität (400) zu Folgendem zu veranlassen:
Erhalten einer Anforderung von einem Bereitstellungsserver (300), dass dem Teilnehmermodul (200) das Abonnementprofil bereitgestellt werden soll, wobei die Anforderung einen öffentlichen Schlüssel eines Paares eines privaten und eines öffentlichen Schlüssels umfasst, der von dem Teilnehmermodul generiert wurde und mit einem privaten Schlüssel des Paares des privaten und des öffentlichen Schlüssels digital signiert ist, wodurch eine erste Signatur erzeugt wird;
Generieren des Abonnementprofils, wobei das Abonnementprofil Anmeldeinformationen umfasst, die als Funktion des öffentlichen Schlüssels des Paares des privaten und des öffentlichen Schlüssels generiert wurden und von der Anmeldeinformationsausstellerentität (400) signiert sind; und
Bereitstellen des Abonnementprofils an den Bereitstellungsserver (300) zum Bereitstellen des Abonnementprofils an das Teilnehmermodul (200).

## Revendications

1. Procédé de fourniture d'un profil d'abonnement, le procédé étant réalisé par un module d'abonné (200), le procédé comprenant :
la réception (S102), en réponse à la réalisation réussie d'une authentification réciproque avec un serveur de fourniture (300), d'informations de préparation depuis le serveur de fourniture (300), dans lequel les informations de préparation comprennent une indication du type de profil d'abonnement qui doit être fourni ;
la transmission (S104) d'une demande au serveur de fourniture (300) pour fournir le profil d'abonnement au module d'abonné (200), dans lequel la demande comprend une clé publique d'une paire de clés privée-publique générée dans un domaine de sécurité du module d'abonné (200) et est signée numériquement par une clé privée de la paire de clés privée-publique, produisant une première signature, et dans lequel une création du domaine de sécurité est déclenchée par une réception de l'indication ;
le téléchargement (S106) du profil d'abonnement depuis le serveur de fourniture (300), dans lequel le profil d'abonnement comprend une accréditation générée en fonction de la clé publique de la paire de clés privée-publique et est signé numériquement par une entité émettrice d'accréditation (400) ; et
l'installation (S108) du profil d'abonnement dans le domaine de sécurité du module d'abonné (200).

2. Procédé selon la revendication 1, dans lequel l'indication du type de profil d'abonnement qui doit être fourni est reçue dans le cadre de métadonnées de profil du profil d'abonnement ou dans le cadre d'une structure de données smdpSigned2.

3. Procédé selon la revendication 1, dans lequel, lorsque l'indication du type de profil d'abonnement qui doit être fourni est reçue dans le cadre d'une structure de données smdpSigned2, l'indication du type de profil d'abonnement qui doit être fourni est vérifiée dans le cadre de la vérification de la structure de données smdpSigned2 par le module d'abonné (200).

4. Procédé selon l'une quelconque des revendications précédentes, dans lequel les informations de préparation comprennent un identifiant de transaction pour la fourniture du profil d'abonnement, et dans lequel, lorsque le domaine de sécurité est créé, un identifiant d'application du domaine de sécurité est lié à des données de session identifiées par l'identifiant de transaction.

5. Procédé selon l'une quelconque des revendications précédentes, dans lequel les informations de préparation comprennent un identifiant de transaction pour la fourniture du profil d'abonnement, et dans lequel l'identifiant de transaction est transmis au domaine de sécurité lorsque la paire de clés privée-publique doit être générée.

6. Procédé selon la revendication 4, dans lequel la demande est une demande de signature de certificat, CSR, générée dans le domaine de sécurité, dans lequel la CSR comprend la clé publique et l'identifiant de transaction, et dans lequel la CSR est signée à l'aide de la clé privée de la paire de clés privée-publique produisant la première signature.

7. Procédé selon l'une quelconque des revendications précédentes, dans lequel la demande est signée numériquement, produisant une deuxième signature, par une clé privée du module d'abonné (200) distincte de la clé privée du domaine de sécurité avant d'être transmise au serveur de fourniture (300).

8. Procédé selon la revendication 7, dans lequel la demande est transmise, au serveur de fourniture (300), dans des données euiccSigned2 d'une PrepareDownloadResponse d'une commande GetBoundProfilePackage, dans lequel les données euiccSigned2 sont signées numériquement par le module d'abonné (200) produisant la deuxième signature, et la deuxième signature est transmise dans le cadre de la PrepareDownloadResponse.

9. Procédé selon l'une quelconque des revendications précédentes, dans lequel le procédé comprend en outre : l'activation (S110) du profil d'abonnement dans le module d'abonné (200) lorsque le profil d'abonnement a été installé.

10. Procédé de fourniture d'un profil d'abonnement à un module d'abonné (200), le procédé étant réalisé par un serveur de fourniture (300), le procédé comprenant :
l'obtention (S202) d'une indication spécifiant qu'un type de profil d'abonnement doit être préparé pour le module d'abonné (200), dans lequel l'indication fait partie de données de préparation de profil ;
la transmission (S204), en réponse à la réalisation réussie d'une authentification réciproque avec le module d'abonné (200), d'informations de préparation au module d'abonné (200), dans lequel les informations de préparation comprennent une indication du type de profil d'abonnement qui doit être fourni ;
l'obtention (S206) d'une demande du module d'abonné (200) de fournir le profil d'abonnement au module d'abonné (200), dans lequel la demande comprend une clé publique d'une paire de clés privée-publique générée par le module d'abonné (200) et est signée numériquement par une clé privée de la paire de clés privée-publique, produisant une première signature ;
la transmission (S208) de la demande à une entité émettrice d'accréditation (400) ;
l'obtention (S210) du profil d'abonnement depuis l'entité émettrice d'accréditation (400), dans lequel le profil d'abonnement comprend une accréditation générée en fonction de la clé publique de la paire de clés privée-publique et est signé numériquement par l'entité émettrice d'accréditation (400) ; et
l'activation (S212) du module d'abonné (200) pour télécharger le profil d'abonnement depuis le serveur de fourniture (300).

11. Procédé selon la revendication 10, dans lequel les données de préparation de profil spécifient en outre des données d'abonnement qui sont l'un quelconque ou une combinaison quelconque de : partenaires d'itinérance acceptés pour le module d'abonné (200), opérateur de réseau mobile de rattachement du module d'abonné (200), politiques d'utilisation de service pour le module d'abonné (200), propriétaire d'abonnement pour le module d'abonné (200).

12. Procédé selon la revendication 10 ou 11, dans lequel l'indication du type de profil d'abonnement qui doit être fourni est transmise dans le cadre de métadonnées de profil du profil d'abonnement ou dans le cadre d'une structure de données smdpSigned2.

13. Procédé de fourniture d'un profil d'abonnement à un module d'abonné (200), le procédé étant réalisé par une entité émettrice d'accréditation (400), le procédé comprenant :
l'obtention (S302) d'une demande depuis un serveur de fourniture (300) pour fournir le profil d'abonnement au module d'abonné (200), dans lequel la demande comprend une clé publique d'une paire de clés privée-publique générée par le module d'abonné (200) et est signée numériquement par une clé privée de la paire de clés privée-publique, produisant une première signature ;
la génération (S304) du profil d'abonnement, dans lequel le profil d'abonnement comprend une accréditation générée en fonction de la clé publique de la paire de clés privée-publique et est signé numériquement par l'entité émettrice d'accréditation (400) ; et
la transmission (S306) du profil d'abonnement au serveur de fourniture (300) pour fournir le profil d'abonnement au module d'abonné (200).

14. Module d'abonné (200) pour la fourniture d'un profil d'abonnement, le module d'abonné (200) comprenant une circuiterie de traitement (210), la circuiterie de traitement étant configurée pour amener le module d'abonné (200) à :
recevoir, en réponse à la réalisation réussie d'une authentification réciproque avec un serveur de fourniture (300), des informations de préparation depuis le serveur de fourniture (300), dans lequel les informations de préparation comprennent une indication du type de profil d'abonnement qui doit être fourni ;
transmettre une demande au serveur de fourniture (300) pour fournir le profil d'abonnement au module d'abonné (200), dans lequel la demande comprend une clé publique d'une paire de clés privée-publique générée dans un domaine de sécurité du module d'abonné (200) et est signée numériquement par une clé privée de la paire de clés privée-publique, produisant une première signature, et dans lequel une création du domaine de sécurité est déclenchée par une réception de l'indication ;
télécharger le profil d'abonnement depuis le serveur de fourniture (300), dans lequel le profil d'abonnement comprend une accréditation générée en fonction de la clé publique de la paire de clés privée-publique et est signé numériquement par une entité émettrice d'accréditation (400) ; et
installer le profil d'abonnement dans le domaine de sécurité du module d'abonné (200).

15. Serveur de fourniture (300) pour la fourniture d'un profil d'abonnement à un module d'abonné (200), le serveur de fourniture (300) comprenant une circuiterie de traitement (310), la circuiterie de traitement étant configurée pour amener le serveur de fourniture (300) à :
obtenir (S202) une indication spécifiant qu'un type de profil d'abonnement doit être préparé pour le module d'abonné (200), dans lequel l'indication fait partie de données de préparation de profil ;
transmettre, en réponse à la réalisation réussie d'une authentification réciproque avec le module d'abonné (200), d'informations de préparation au module d'abonné (200), dans lequel les informations de préparation comprennent une indication du type de profil d'abonnement qui doit être fourni ;
obtenir une demande du module d'abonné (200) de fournir le profil d'abonnement au module d'abonné (200), dans lequel la demande comprend une clé publique d'une paire de clés privée-publique générée par le module d'abonné et est signée numériquement par une clé privée de la paire de clés privée-publique, produisant une première signature ;
transmettre la demande à une entité émettrice d'accréditation (400) ;
obtenir le profil d'abonnement depuis l'entité émettrice d'accréditation (400), dans lequel le profil d'abonnement comprend une accréditation générée en fonction de la clé publique de la paire de clés privée-publique et est signé numériquement par l'entité émettrice d'accréditation (400) ; et
activer le module d'abonné (200) pour télécharger le profil d'abonnement depuis le serveur de fourniture (300).

16. Entité émettrice d'accréditation (400) pour la fourniture d'un profil d'abonnement à un module d'abonné (200), l'entité émettrice d'accréditation (400) comprenant une circuiterie de traitement (410), la circuiterie de traitement étant configurée pour amener l'entité émettrice d'accréditation (400) à :
obtenir une demande depuis un serveur de fourniture (300) pour fournir le profil d'abonnement au module d'abonné (200), dans laquelle la demande comprend une clé publique d'une paire de clés privée-publique générée par le module d'abonné et est signée numériquement par une clé privée de la paire de clés privée-publique, produisant une première signature ;
générer le profil d'abonnement, dans laquelle le profil d'abonnement comprend une accréditation générée en fonction de la clé publique de la paire de clés privée-publique et est signé numériquement par l'entité émettrice d'accréditation (400) ; et
transmettre le profil d'abonnement au serveur de fourniture (300) pour fournir le profil d'abonnement au module d'abonné (200).
